(19) **Europäisches Patentamt**
**European Patent Office**
**Office européen des brevets**

(11) **EP 1 324 069 B1**

(12) **EUROPEAN PATENT SPECIFICATION**

(45) Date of publication and mention
of the grant of the patent:
**02.09.2009 Bulletin 2009/36**

(51) Int Cl.:
**G01S 15/10** *(2006.01)*  **G01S 7/523** *(2006.01)*
**G01S 7/537** *(2006.01)*

(21) Application number: **01830801.5**

(22) Date of filing: **21.12.2001**

(54) **A system for detecting distances using chaotic signals**

Vorrichtung zur Abstandsmessung mittels chaotischer Signale

Dispositif de détection des distances utilisant des signaux chaotiques

(84) Designated Contracting States:
**DE FR GB IT**

(43) Date of publication of application:
**02.07.2003 Bulletin 2003/27**

(73) Proprietor: **STMicroelectronics S.r.l.**
**20041 Agrate Brianza (Milano) (IT)**

(72) Inventors:
  • **Fortuna, Luigi**
    **96100 Siracusa (IT)**
  • **Rizzo, Alessandro**
    **95024 Acireale (Catania) (IT)**
  • **Frasca, Mattia**
    **95123 Catania (IT)**
  • **Branciforte, Marco**
    **95131 Catania (IT)**
  • **Bartolone, Marco**
    **98040 Torregrotta (Messina) (IT)**

(74) Representative: **Bosotti, Luciano et al**
**c/o Buzzi, Notaro & Antonielli d'Oulx**
**Via Maria Vittoria 18**
**10123 Torino (IT)**

(56) References cited:
**GB-A- 2 156 986**    **US-A- 5 321 409**

• **KAWABATA K ET AL: "Distance measurement method under multiple ultra sonic sensors environment" INDUSTRIAL ELECTRONICS, CONTROL, AND INSTRUMENTATION, 1996., PROCEEDINGS OF THE 1996 IEEE IECON 22ND INTERNATIONAL CONFERENCE ON TAIPEI, TAIWAN 5-10 AUG. 1996, NEW YORK, NY, USA, IEEE, US, 5 August 1996 (1996-08-05), pages 812-816, XP010203479 ISBN: 0-7803-2775-6**

• **FORTUNA L ET AL: "Chaos preservation through continuous chaotic pulse position modulation" ISCAS 2001. THE 2001 IEEE INTERNATIONAL SYMPOSIUM ON CIRCUITS AND SYSTEMS (CAT. NO.01CH37196), ISCAS 2001. THE 2001 IEEE INTERNATIONAL SYMPOSIUM ON CIRCUITS AND SYSTEMS, SYDNEY, NSW, AUSTRALIA, 6-9 MAY 2001, pages 803-806 vol. 2, XP002199708 2001, Piscataway, NJ, USA, IEEE, USA ISBN: 0-7803-6685-9**

• **EVERETT H R: "SURVEY OF COLLISION AVOIDANCE AND RANGING SENSORS FOR MOBILE ROBOTS" ROBOTICS AND AUTONOMOUS SYSTEMS, ELSEVIER SCIENCE PUBLISHERS, AMSTERDAM, NL, vol. 58, no. 1, 1 May 1989 (1989-05-01), pages 5-67, XP000113868 ISSN: 0921-8890**

• **ARENA P ET AL: "CHUA'S CIRCUIT CAN BE GENERATED BY CNN CELLS" IEEE TRANSACTIONS ON CIRCUITS AND SYSTEMS I: FUNDAMENTAL THEORY AND APPLICATIONS, IEEE INC. NEW YORK, US, vol. 42, no. 2, 1 February 1995 (1995-02-01), pages 122-125, XP000510186 ISSN: 1057-7122**

• **KOLUMBAN G ET AL: "THE ROLE OF SYNCHRONIZATION IN DIGITAL COMMUNICATIONS USING CHAOS -PART I: FUNDAMENTALS OF DIGITAL COMMUNICATIONS" IEEE TRANSACTIONS ON CIRCUITS AND SYSTEMS I: FUNDAMENTAL THEORY AND APPLICATIONS, IEEE INC. NEW YORK, US, vol. 44, no. 10, 1 October 1997 (1997-10-01), pages 927-936, XP000722574 ISSN: 1057-7122**

EP 1 324 069 B1

- KOLUMBAN G ET AL: "THE ROLE OF SYNCHRONIZATION IN DIGITAL COMMUNICATIONS USING CHAOS -PART II: CHAOTIC MODULATION AND CHAOTIC SYNCHRONIZATION" IEEE TRANSACTIONS ON CIRCUITS AND SYSTEMS I: FUNDAMENTAL THEORY AND APPLICATIONS, IEEE INC. NEW YORK, US, vol. 45, no. 11, November 1998 (1998-11), pages 1129-1139, XP000866877 ISSN: 1057-7122

- KOLUMBAN GEZA ET AL: "Role of synchronization in digital communications using chaos - Part III: Performance bounds for correlation receivers" IEEE TRANS CIRCUITS SYST I FUNDAM THEOR APPL;IEEE TRANSACTIONS ON CIRCUITS AND SYSTEMS I: FUNDAMENTAL THEORY AND APPLICATIONS DEC 2000 IEEE, PISCATAWAY, NJ, USA, vol. 47, no. 12, December 2000 (2000-12), pages 1673-1683, XP002199709

## Description

<u>Field of the invention</u>

The present invention relates to systems for detecting distances and has been developed with particular attention paid to its possible application for avoiding collisions with obstacles and/or other vehicles in contexts such as the vehicle sector, robotics, industrial plants and systems that use automated guided vehicles (AGVs), and similar sectors.

In the above-mentioned contexts of use the problem of avoiding collisions is rendered even more complex by the fact that, in the vast majority of cases, operations take place in non-structured environments, and consequently intelligent control of the vehicles and/or mobile elements involved must envisage anti-collision strategies and sensing systems that are able, for instance, to plan paths that are alternative to the ones defined in the initial step of control and/or are able to signal the presence of obstacles, in particular on the basis of data coming from heteroceptive sensors associated to the vehicle/mobile element.

<u>Description of the prior art</u>

The solution according to the invention belongs in the line of solutions that envisage the use of sensors which are able to measure the so-called time of flight (TOF), namely the time interval that elapses between the transmission of a wave and the reception of the wave reflected after interaction with an obstacle.

Implementation of driving schemes based upon the use of distance sensors that are able to detect and/or measure the time of flight usually envisages (for example in applications in the robotics sector or in the vehicle sector) recourse to algorithms aimed at handling the transmission intervals of the various sensors; the vehicle/mobile element is usually equipped with a number of sensors which act in a number of directions in order to examine the entire surrounding space or, at least, the portion of space of interest for avoiding collisions.

The above approach requires a dedicated control unit, such as the one described, for example, in H.R. Everett, Sensors for Mobile Robots, Theory and Application, A.K. Peters Ltd., Natick, MA, 1995.

A number of sensors associated to the same vehicle/mobile element may interact together, thus giving rise to situations of interference that may vitiate the quality of the measurements. In addition, the use of a number of vehicles/mobile elements (i.e., the fact of operating in a multi-user scenario) introduces an additional source of interference.

The algorithms according to the prior art thus prove far from easy to apply to situations in which a number of vehicles/mobile elements are present. In this case, there is a practically unavoidable need to provide a monitoring and co-ordinating unit for the entire complex of vehicles/mobile elements involved, this being a choice that ends up by entailing, at least in the majority of applications, additional costs and, in more general terms, a considerable loss in the autonomy of movement of vehicles/elements designed to operate independently of one another.

A system for detecting distances using chaotic signals according to the preamble of claim 1 is known e.g. from KAWABATA K ET AL: "Distance measurement method under multiple ultra sonic sensors environment". INDUSTRIAL ELECTRONICS, CONTROL, AND INSTRUMENTATION, 1996, PROCEEDINGS OF THE 1996 IEEE IECON 22ND INTERNATIONAL CONFERENCE ON TAIPEI, TAIWAN 5-10 AUG. 1996, NEW YORK, NY, USA, IEEE, US, 5 August 1996 (1996-08-05), pages 812-816, XP010203479 ISBN: 0-7803-2775-6.

<u>Object and summary of the present invention</u>

The purpose of the present invention is therefore to provide a system for detecting distances, which can be applied in particular to systems comprising a number of vehicles and/or mobile elements and which is able to operate in an altogether satisfactory way in a multi-user scenario, namely, in a context in which each sensor encounters some difficulty in distinguishing its own echo on account of the signals generated simultaneously by the other sensors associated to the same vehicle/mobile element or else to different vehicles/elements. The solution according to the invention moreover tackles the problem linked to the onset of multipath-fading phenomena, i.e., phenomena whereby a sensor is not able to distinguish the echo reflected by the obstacle along the shortest path (a path representing the actual distance from the obstacle) from the other echoes that cover longer paths, such as the ones generated by indirect reflections due to walls or other obstacles.

According to the present invention, the above purpose is achieved thanks to a system having the characteristics specified in the claims which follow.

In particular, the invention exploits the possibility of using the advantages afforded by chaotic communications in order to tackle the problems linked to the use of sensors based on the measurement of the time of flight (TOF).

Chaos-based communication schemes exploit the high sensitivity to variations in the initial conditions and in the values of the system parameters for generating a large variety of codes based upon non-predictable sequences.

As is known, chaotic-communication schemes may be divided into coherent schemes and non-coherent schemes, according to whether the receiver knows or does not know the carrier transmitted.

For a general overview in this connection reference may be made to the following works by G. Kolumbàn et al.: "The Role of Synchronization in Digital Communications using Chaos", Part I: Fundamentals of Digital Communications, IEEE Trans., CAS-1, Oct. 1997; Part II: Chaotic Modulation and Chaotic Synchronization, IEEE Trans. CAS-1, Nov. 1998; Part III: Performance Bounds for Correlation Receivers, IEEE Trans. CAS-1, Dec. 2000.

In particular, in the currently preferred embodiment, the solution according to the invention envisages recourse to a Chaotic Pulse Position Modulation (CPPM) scheme. According to this scheme, modulation of the information is contained in the time interval elapsing between the generation of two successive pulses, the said interval being determined by a chaotic digital source. In this connection, useful reference may be made to G.M. Maggio et al., "Chaotic pulse-position modulation for ultrawide-band communication systems", Proc. UWB '99, Washington D.C., Sept. 28-30, 1999.

Even more preferably, a signal is sent to the sensor, which consists of pulses generated according to a CPPM scheme of an analog type, such as the one described in L. Fortuna, M. Frasca, A. Rizzo, "Chaos Preservation through Continuous Chaotic Pulse Position Modulation", ISCAS 2001.

The advantage of the use of an analog scheme, as regards generation of the sequence of time intervals necessary for modulation, lies primarily in a considerable saving. According to the traditional CPPM scheme, for generating a chaotic sequence it is in fact required to implement a chaotic map on a microprocessor provided with a sufficiently high number of bits. Instead, recourse to an analog or "continuous" CPPM scheme envisages the use of a circuitry with just a few operational amplifiers and a small number of other discrete components which are far from costly.

The distance from the obstacle is evaluated by performing the correlation between the signal transmitted and the signal received, which presents only one important peak at TOF. This property is guaranteed also in multi-user scenarios in so far as correlation between two chaotic signals coming from different sources or between two different portions of the same chaotic signal is very low. In addition, the problem linked to multipath fading is overcome, in so far as the correlation peak due to the wave reflected directly is much higher than other possible peaks due to multiple reflections of the same signal.

The solution according to the invention is therefore characterized by a low cost; the system does not in fact envisage the presence of a dedicated hardware and can be implemented using low-cost circuitry. In terms of performance, the system according to the invention solves the problems that arise in multi-user scenarios with multipath fading without deteriorating the original performance of the sensor used. In terms of flexibility, the system is able to drive a wide variety of sensors with far from major modifications. It is moreover possible to do without a central control unit; operation of the sensor is in fact managed at a local level and, in all those applications in which a plurality of sensors are to be installed, there is no need to have available a control or co-ordination unit.

Detailed description of the annexed drawings

The present invention will now be described, purely by way of non-limiting example, with reference to the attached drawings, in which:

- Figure 1 illustrates, in the form of a block diagram, the general architecture of a system according to the invention;
- Figure 2 is a diagram of a so-called Chua's circuit, which can be used in the framework of the present invention;
- Figure 3 comprises two parts, namely 3a and 3b, which respectively illustrate the chaotic attractor obtained using the circuit of Figure 2, and one of the corresponding state variables, which can be used as a carrier for a pulse position modulation (PPM) modulator;
- Figure 4 illustrates the diagram of said modulator;
- Figures 5 and 6 illustrate the generation of various signals within a system according to the invention, the parts of figures designated by 5b and 6b being zoomed representations of the parts of figures designated by 5a and 6a;
- Figure 7 presents the graphs of the transmission signal and of the echo received in a system according to the invention;
- Figure 8 is a general block diagram of the driving circuit of a sensor used in the framework of the present invention; and
- Figure 9 is a diagram illustrating the result of the correlation between the signal transmitted and the signal received in a system according to the invention.

Detailed description of an example of embodiment of the invention

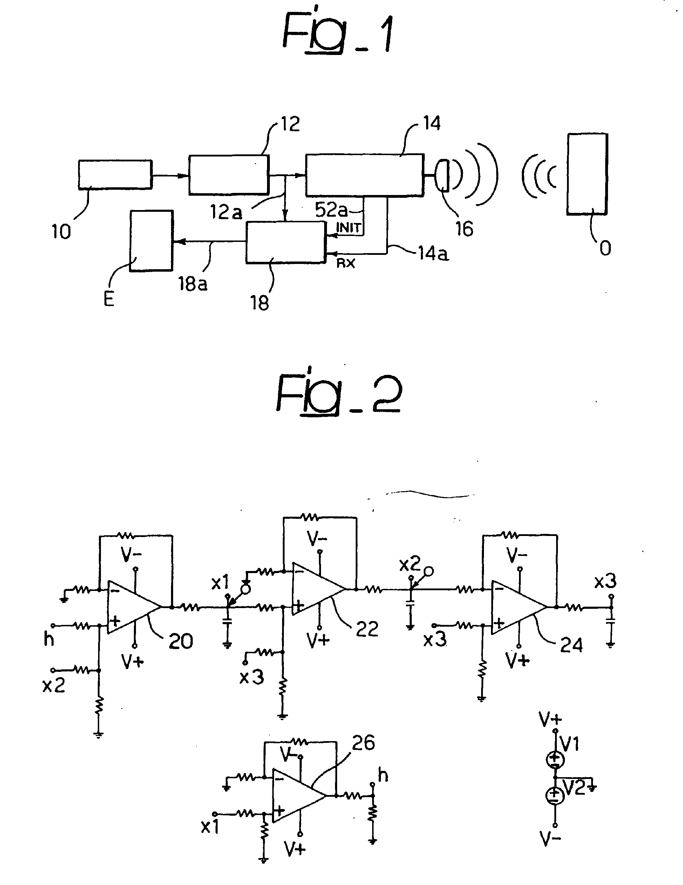

In the block diagram of Figure 1, the reference number 10 designates, as a whole, a chaos generator, preferably of an analog type, which drives a PPM modulator 12.

The transmission signal (TX) thus obtained is a Chaotic Pulse Position Modulation signal (CPPM) designed to be supplied to a driving block 14 in such a way as to ensure proper operation of a sensor 16.

The sensor 16 may advantageously consist of a normal piezoelectric transducer of the type used, for instance, in burglary-alarm or antitheft systems, such as volumetric and/or antilifting systems used in vehicle applications.

The transmission signal TX (typically consisting of an ultrasound signal) generated by the sensor 16 illuminates an obstacle O. The obstacle O sends the signal that impinges upon it back to the sensor 16 in the form of an echo. The sensor 16 detects the said echo signal, generating a receiving signal (RX), which is detected by the driving unit 14 and sent on to a correlator 18.

The correlator in question receives both the transmission signal TX - on a line 12a- and the received signal RX - on a line 14a -, and is thus able to perform the correlation between the signal transmitted and the echo received by the sensor, in order to obtain the time of flight (TOF) corresponding to the instant at which the function of correlation between the transmitted signal TX and the received echo signal RX reaches its maximum value.

The reference E generically designates any circuit element that is able to exploit (in a known way and according to the aims of application of the system according to the invention) the signal corresponding to TOF (and hence to the distance between the sensor 16 and the obstacle O) generated by the correlator 18 on an output line designated by 18a.

It will be appreciated that the present invention does not regard specifically the aims and modes of operation of the element E and the circuits possibly associated thereto, which are therefore to be considered as on the whole known.

As has already been said, the sensor 16 preferably consists of an ultrasound sensor, such as an ultrasound sensor manufactured by Polaroid (Series 6500).

In principle, direct application of CPPM techniques to an ultrasound sensor could give rise to a number of problems, mainly linked to the mechanical inertia of the sensor.

To prevent the above problems, in the currently preferred embodiment of the invention, a signal is sent to the sensor 16, the said signal consisting of the alternation of pulse trains generated at two different frequencies (within the useful band of the sensor). Switching between one modulation frequency and the other takes place at time intervals generated according to a chaotic law.

In a preferred way, the generation of the chaotic carrier is entrusted to a so-called Chua's circuit built using operational amplifiers according to the electrical diagram shown in Figure 2.

The above circuit diagram, which comprises four operational amplifiers 20, 22, 24 and 26, corresponds to the solution illustrated in P. Arena, S. Baglio, L. Fortuna, G. Manganaro, "Chua's Circuit Can Be Generated by CNN Cells", IEEE Trans. CAS-1, Feb. 1995, a work to which the reader is referred for a more detailed illustration of said circuit and its modes of operation.

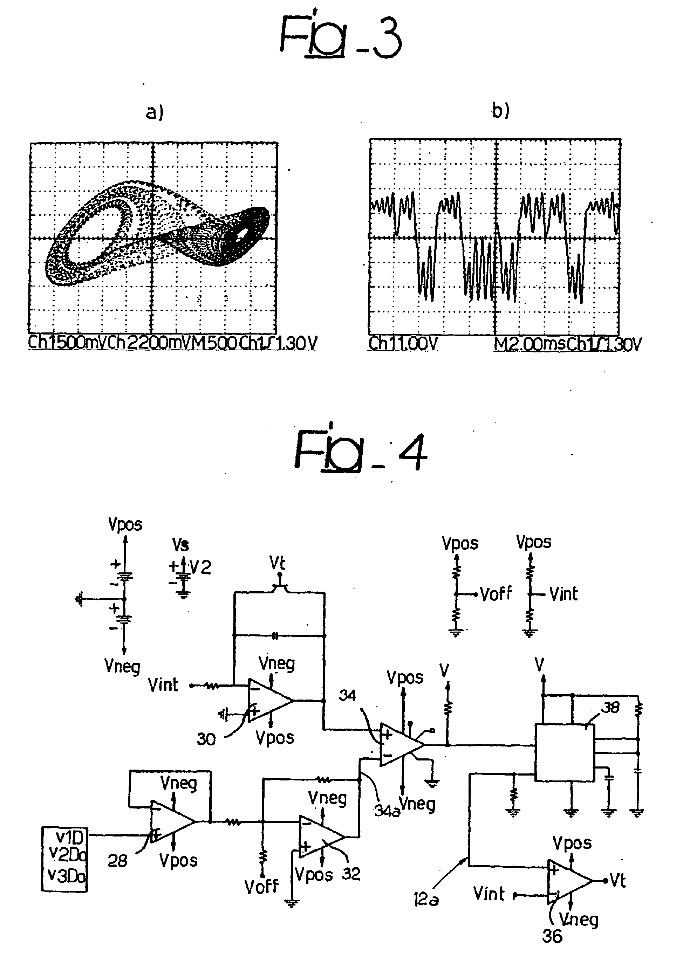

The diagram of Figure 3 illustrates the chaotic attractor called "Chua's double scroll" that may be obtained by means of the circuit of Figure 2. Figure 3 reproduces, instead, the possible plot in time of one of the state variables ($x_1$) linked to the aforesaid chaotic attractor.

In the example of embodiment here illustrated, the aforesaid state variable $x_1$ is used as a carrier for driving the PPM modulator 12.

The latter is preferably implemented according to the general diagram represented in Figure 4.

Also in this case, the reference numbers 28 and 36 designate as many operational amplifiers connected together according to the circuit layout represented in Figure 4. The representation is evident for a person skilled in the sector, and consequently a detailed description is not called for herein. This also applies to the block designated by 38, which consists of a bistable multivibrator.

Basically, the part of circuit comprising the operational amplifier 30 is a saw-tooth generator that is able to generate a ramp with an appropriate slope, whilst the operational amplifier 34 is basically configured as a threshold comparator in which the aforesaid ramp signal with appropriate slope is compared with the chaotic carrier (state variable $X_1$ of Figure 3a) applied on an input line 34a. In this way, whenever the ramp signal reaches the level of the chaotic signal, namely the carrier, a pulse of a desired duration (which may be adjusted by acting on the multivibrator 38) is generated.

In greater detail, the diagram of Figure 4 envisages a circuit implementation in which it is possible to distinguish a block for adaptation of the level of the chaotic signal (elements 28 and 32), an integrator for generation of the ramp (operational amplifier 30 and circuits associated thereto), the comparator of the two signals (operational amplifier 34), and a multivibrator 38 which has the function of adjusting the duration of the pulse. The circuit is built in such a way that it is possible to act easily on fundamental parameters, such as the slope of the ramp, the amplification and offset of the chaotic signal, and the duration of the pulse. The aim of the foregoing is to adapt the modulated signal to the physical characteristics of the ultrasound sensor 16 according to the modalities which will be described in greater detail hereinafter.

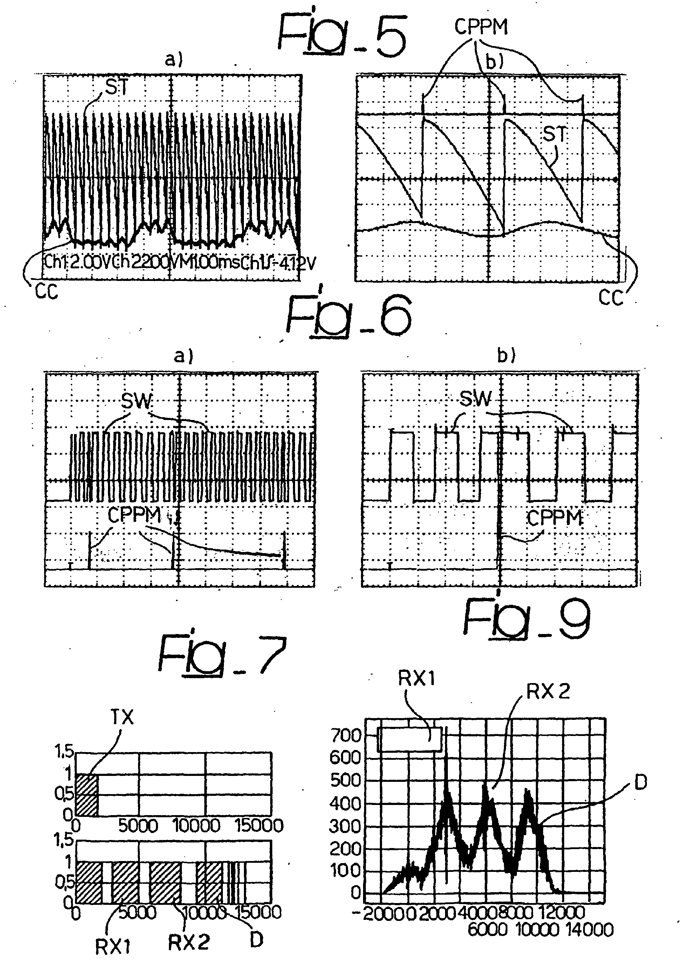

From Figures 5a and 5b it is possible to realize that the duration of the ramp - saw-tooth signal ST in the top part of Figure 5a - follows the pattern of the chaotic signal CC, reproduced in the bottom part of Figure 5a.

In particular, clearly visible in the zoomed view of Figure 5b is, in addition to the waveforms of the ramp signal ST and of the chaotic carrier CC, the modulated signal CPPM, which is reproduced at the top.

The solution of using a pulse signal, such as the signal CPPM represented in Figure 5b for driving directly an ultrasound sensor, such as the sensor 16, comes up against a difficulty due to the fact that, if the sensor is excited by a train of pulses with variable time distances, but always within its useful frequency band ($\Delta W$), on account of its mechanical inertia the sensor does not manage to follow with the necessary promptness the continuous frequency variations that are imposed.

For the sensor 16 to be able to vary its own oscillation frequency as a result of a variation in the excitation applied it is thus necessary to wait a period of time within which the sensor stabilizes at the new frequency.

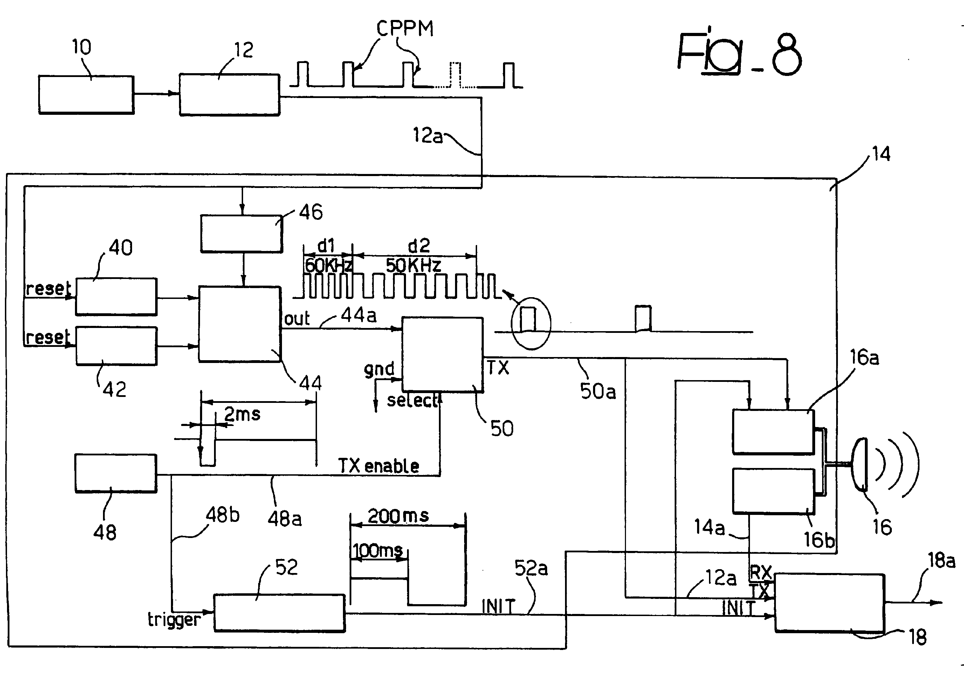

For this reason, in the currently preferred embodiment of the invention, the general diagram of Figure 1 is in effect implemented according to the modalities more clearly illustrated in Figure 8. It will be appreciated that, in the diagram of Figure 8, parts or elements already mentioned in the description of Figure 1 are designated by the same reference numbers.

Basically, the function of the driving circuit 14 is to generate a signal that is able to drive the ultrasound sensor 16 properly, in such a way that the signal received will not lose the information transmitted, namely the chaotic information.

The circuit 14 envisages the use of two signals (for instance, square-wave signals) at different frequencies, but in any case comprised within the useful band $\Delta W$, transmitted in sequence in such a way that the duration of each of them is equal to the (chaotic) distances generated by the modulator 12.

For a proper implementation of the above solution, the choice of two parameters is significant:

- the location of the two frequencies within the band $\Delta W$; and
- the range of the time distances generated by the CPPM modulation.

The former choice is basically linked to the sensor used, and in particular to the gain curve of the response. Consequently, it is possible to choose any frequencies falling within $\Delta W$, even though, in order to render the correlation mechanism more effective it is desirable that the two frequencies should be sufficiently distant from one another.

The two frequencies chosen, together with the mechanical characteristics of the sensor 16, determine the range of the chaotic distances that the modulator CPPM can generate. In fact, the minimum chaotic distance admissible depends upon the time required for the sensor to stabilize on the new frequency whenever a change in frequency occurs. The maximum distance is instead determined by the total duration of the signal to be transmitted for detecting the distance and upon the minimum number of samples required for the transmitted signal to be effectively recognized during the correlation stage.

With reference to the Polaroid 6500 ultrasound sensor referred to previously, the corresponding useful band $\Delta W$ ranges from 50 kHz to 60 kHz with a spatial coverage of between 30 cm and 12 m, and hence with maximum TOF of 100 milliseconds. In addition, in view of the capacitive nature of the sensor, a period of a further 100 milliseconds is required for the sensor 16 to return to the quiescent state.

Consequently, the measurements are made with a 5-Hz frequency. The operating frequencies of the sensor are thus chosen at the margins of its band, namely adopting two frequencies F1 and F2 of 50 kHz and 60 kHz, respectively.

For this purpose, in the driving circuit 14 (see Figure 8) use is envisaged of two timer circuits 40, 42 which practically function as oscillators for generating the two frequencies F1, F2 according to the reception of the pulse train coming from the modulator 12.

In a preferred way, the two generators 40, 42 are configured so that at each pulse coming from the modulator 12 they are reset so as to wipe out any regularity present in the signal transmitted.

Again in a preferred way, in view of the mechanical characteristics of the sensor 16, the range of the chaotic distances is chosen between a minimum value of 160 microseconds and a maximum value of 200 microseconds. The aim of the foregoing is to ensure a minimum of eight oscillations for each of the frequencies F1 and F2 and a minimum of ten chaotic values, there having been imposed a duration of the transmission signal of 2 milliseconds, taking into account the characteristics of the sensor.

The reference number 44 designates a selection block or electronic switch that transfers onto its own output line 44a either one or the other of the signals coming from the generators 40, 42, according to a switching-control signal generated by a module 46 which is sensitive to the pulses coming from the modulator 12.

In practice, at each pulse coming from the modulator 12, the module 46 acts on the switch 44 in such a way that the latter switches its operating position. In this way, at each pulse coming from the modulator 12, the frequency of the signal present on the output line 44a switches from F1 to F2 and from F2 to F1 according to an orderly alternating sequence, but with switching instants defined in a chaotic way.

Clearly visible in Figure 6a are, in the bottom part, the pulse signal CPPM and, in the top part, the square-wave signal SW, the frequency of which switches from F2 to F1, from F1 to F2, and then again from F2 to F1 at the instants of arrival of successive pulses of the signal CPPM. In the zoomed view of Figure 6b one of the transitions from the frequency F2 to the frequency F1 may be seen in greater detail.

To return to the diagram of Figure 8, the reference number 48 designates a third timer designed to generate both a transmission-enable signal (TX*enable*), which is forwarded on a line 48a, and a receive-enable signal (INIT), which is forwarded on a line 48b.

In particular, the transmission-enable signal TX*enable* acts on a transmission-control circuit, designated by 50, in such a way as to cause transmission of the signal present on the line 44a (at the frequency F1 or at the frequency F2) to be enabled, for example, for 2 ms every 200 ms.

The receive-enable signal INIT is transmitted on the line 48b to a receive-enable module, designated by 52. The signal INIT is basically a square-wave signal with 50% duty cycle, hence such as to enable reception for 100 ms and to bring the sensor 16 to a quiescent state (in so far as it acts as a receiver) for the remaining 100 ms.

Finally, the reference numbers 16a and 16b designate two modules (of a known type) associated to the sensor 16, respectively with the function of a transmission-interface circuit (16a) and with the function of a receiving-interface circuit (16b).

The transmitted signal TX coming out of the module 50 on a line 50a is sent to the input of the module 16a to enable the corresponding excitation of the sensor 16.

The above signal is also sent, on a line corresponding to the line 12a of Figure 1, to the correlator 18.

In a symmetrical way, the receive-enable signal INIT present on the line 52a at output from the module 52 is sent both to the input of the module 16a (to inhibit in any case transmission of the signal TX when the sensor 16 sets itself for listening to the echoes received, namely to the signal RX) and to the input of the correlator 18.

A further input of said correlator is represented by the line 14a (see also Figure 1), which constitutes the output line of the receiving module 16b.

The representation of Figure 7 shows that to each burst of the transmitted signal TX there corresponds a first echo RX1 (the echo to be used for the purposes of sensing), which is usually followed by at least one second echo RX2 and further disturbance signals, designated, as a whole, by D.

According to the invention, the possibility of recognizing the signal received by the ultrasound sensor in a unique way even in the presence of multi-user scenarios and multipath fading is based upon recognition of the strong correlation that said signal maintains with the signal transmitted.

In the solution described, the above purpose is achieved by using precisely the continuous chaotic modulation (CPPM) of the signal transmitted by the ultrasound. In this way, on account of its peculiarities the chaotic information contained in the signal received bestows on the signal a strong correlation with the transmitted signal, whilst the latter is markedly uncorrelated to any other disturbance signal.

The classic function of correlation, which is given in the equation below, goes through an integration operation which, referred to a transmission signal TX and a receiving signal RX acquired with an appropriate sampling time $T_c$, gives rise to a correlation function $C(\tau)$ discretized as follows:

$$C(\tau) = \sum_n [TX(nT_c - \tau) \bullet RX(nT_c)]$$

Since both of the signals TX and RX are of a digital type, the correlation operation is transformed into a sequence of simple logic operations.

Figure 9 presents the correlation function for a case in which a correct echo (echo I), an echo due to multipath fading (echo II), and a third signal coming from an additional ultrasound sensor (this may be, for instance, a disturbance due to a crosstalk phenomenon) are detected.

In Figure 9 the presence of a high correlation peak may be noted exactly at the correct time distance. Normalizing the correlation function to unity, it may be noted that the peak due to proper reflection from the obstacle (proportional to the distance from the obstacle O) assumes a value of 0.85, this being in contrast with the other two peaks due to the second echo and to the disturbance, the normalized values of which do not exceed 0.5.

Tests carried out by the present applicant have proven total repeatability of the above result in a wide range of situations of use based upon the utilization of a number of sensors in the same environment and by the presence of sources of disturbance of different kinds. Of course, without prejudice to the principle of the invention, the details of construction and the embodiments may vary widely with respect to what is described and illustrated herein, without thereby departing from the scope of the present invention.

**Claims**

1. A system for detecting the distance from an obstacle (0), comprising:

- at least one transducer (16) for generating a transmission signal (TX) to be sent in the direction of said obstacle (O) and for obtaining a receiving signal (RX) corresponding to an echo produced by the reflection of said transmission signal (TX) off said obstacle (O), and
- a chaos generator (10, 12, 14) for driving said at least one transducer (16) with a chaotic signal, so that said transmission signal (TX) has characteristics of a chaotic signal,

**characterized in that** it comprises:

- a signal source (40 to 46; 50) for producing said transmission signal (TX) with at least one first frequency (F1) and at least one second frequency (F2), different from one another, said signal source (40 to 46; 50) being driven by said chaos generator (10, 12) in such a way that switching between said first frequency (F1) and said second frequency (F2) takes place at time intervals generated as a function of said chaotic signal.

2. The system according to Claim 1, **characterized in that** it comprises a correlator (18) for correlating said transmission signal (TX) and said receiving signal (RX) so as to produce a corresponding correlation signal (18a), so that the distance of said obstacle (O) from said at least one transducer (16) is identified by the instant at which said correlation function assumes the maximum value.

3. The system according to Claim 1 or Claim 2, **characterized in that** it comprises, as chaos generator (10), a Chua's circuit.

4. The system according to any one of Claims 1 to 3, **characterized in that** said transmission signal (TX) is generated starting from one of the state variables ($x_1$) of said chaos generator (10).

5. The system according to any one of the preceding claims, **characterized in that** it comprises a pulse generator (12) driven by said chaos generator (10) according to a general pulse-position modulation scheme, so that the time interval that elapses between the generation of two consecutive pulses by said pulse generator (12) has characteristics of a chaotic signal.

6. The system according to Claim 5, **characterized in that** said pulse generator is a pulse generator of an analog type (12).

7. The system according to Claim 6, **characterized in that** said pulse generator (12) comprises:

- a ramp-signal source (30); and
- a threshold comparator in which said ramp signal is compared with a reference signal (34a) produced by a chaos generator, the generation of said pulses occurring when the level of said ramp signal reaches the level of said reference signal of a chaotic type.

8. The system according to Claim 1, **characterized in that** said signal source (40 to 46; 50) generates said transmission signal (TX) as a square-wave signal of varying frequency.

9. The system according to Claim 1 or Claim 8, **characterized in that** said at least one transducer (16) has a working bandwidth ($\Delta W$), and said signal source (40 to 46; 50) is configured for generating said transmission signal (TX) at frequencies comprised in said working bandwidth ($\Delta W$).

10. The system according to Claim 9, **characterized in that** said signal source (40 to 46; 50) is configured (40, 42) for generating said transmission signal (TX) with a first transmission frequency (F1) and a second transmission frequency (F2), said first transmission frequency (F1) and said second transmission frequency (F2) being located at the ends of said working bandwidth ($\Delta W$) of the transducer.

11. The system according to Claim 5 and any one of Claims 8 to 10, **characterized in that** said signal source (40 to 46; 50) is driven by said pulse generator (12) so that, upon emission of each pulse generated by said pulse generator (12), said signal source (40 to 46; 50) modifies the frequency of said transmission signal (TX).

12. The system according to Claim 11, **characterized in that** said signal source (40 to 46; 50) comprises a plurality of respective signal generators (40, 42), each of which is able to generate a respective signal at a given frequency (F1, F2), and **in that** said respective signal generators (40, 42) may be reset by said pulse generator (12) upon emission of each of said pulses.

13. The system according to any one of the preceding claims, **characterized in that** said transducer (16) is a piezoelectric transducer.

14. The system according to any one of the preceding claims, **characterized in that** said transducer (16) carries associated to it respective transmission (16a) and receiving (16b) interfaces, so that said transducer (16) may be used both for generating said transmission signal (TX) according to the signal generated by said chaos generator (10) and for obtaining said receiving signal (RX) corresponding to the reflection of said transmission signal (TX) off said obstacle (O).

15. The system according to Claim 14, **characterized in that** it comprises an enabling/disabling circuit (52) for inhibiting simultaneous operation of said transducer (16) both during transmission (16a) and during reception (16b).

**Patentansprüche**

1. System zum Feststellen der Distanz von einem Hindernis (O), aufweisend:

   - mindestens einen Wandler (16) zum Erzeugen eines Sendesignals (TX), das in Richtung des Hindernisses (O) zu senden ist, und zum Schaffen eines Empfangssignals (RX), das einem Echo entspricht, das durch Reflexion des Sendesignals (TX) von dem Hindernis (O) erzeugt wird, und
   - einen Chaosgenerator (10, 12, 14) zum Ansteuern des mindestens einen Wandlers (16) mit einem chaotischen Signal, so dass das Sendesignal (TX) Eigenschaften eines chaotischen Signals aufweist,

   **dadurch gekennzeichnet, dass** das System Folgendes aufweist:

   - eine Signalquelle (40 bis 46; 50) zum Erzeugen des Sendesignals (TX) mit mindestens einer ersten Frequenz (F1) und mindestens einer zweiten Frequenz (F2), die voneinander verschieden sind, wobei die Signalquelle (40 bis 46; 50) von dem Chaosgenerator (10, 12) derart angesteuert wird, dass ein Umschalten zwischen der ersten Frequenz (F1) und der zweiten Frequenz (F2) zu Zeitintervallen stattfindet, die als Funktion des chaotischen Signals erzeugt werden.

2. System nach Anspruch 1,
   **dadurch gekennzeichnet, dass** es einen Korrelator (18) zum Korrelieren des Sendesignals (TX) und des Empfangssignals (RX) aufweist, um ein entsprechendes Korreiationssignal (18a) zu erzeugen, so dass die Entfernung des Hindernisses (O) von dem mindestens einen Wandler (16) durch den Moment identifiziert wird, zu dem die Korrelationsfunktion den maximalen Wert annimmt.

3. System nach Anspruch 1 oder Anspruch 2,
   **dadurch gekennzeichnet, dass** es eine Chua-Schaltung als Chaosgenerator (10) aufweist.

4. System nach einem der Ansprüche 1 bis 3,
   **dadurch gekennzeichnet, dass** das Sendesignal (TX) ausgehend von einer der Zustandsvariablen ($x_1$) des Chaosgenerators (10) erzeugt wird.

5. System nach einem der vorausgehenden Ansprüche,
   **dadurch gekennzeichnet, dass** es einen Pulsgenerator (12) aufweist, der von dem Chaosgenerator (10) nach einem allgemeinen Pulslagenmodulationsverfahren angesteuert wird, so dass das Zeitintervall, das zwischen der Erzeugung von zwei aufeinander folgenden Pulsen durch den Pulsgenerator (12) verstreicht, Eigenschaften eines chaotischen Signals aufweist.

6. System nach Anspruch 5,
   **dadurch gekennzeichnet, dass** es sich bei dem Pulsgenerator um einen Pulsgenerator analogen Typs (12) handelt.

7. System nach Anspruch 6,
   **dadurch gekennzeichnet, dass** der Pulsgenerator (12) Folgendes aufweist:

   - eine Rampensignalquelle (30); und
   - einen Schwellenwert-Komparator, in dem das Rampensignal mit einem von einem Chaosgenerator erzeugten Referenzsignal (34a) verglichen wird, wobei die Erzeugung der Pulse dann stattfindet, wenn das Niveau des Rampensignals das Niveau des Referenzsignals vom Chaos-Typ erreicht.

8. System nach Anspruch 1,

**dadurch gekennzeichnet, dass** die Signalquelle (40 bis 46; 50) das Sendesignal (TX) als Rechteckwellensignal mit variierender Frequenz erzeugt.

9. System nach Anspruch 1 oder Anspruch 8,
   **dadurch gekennzeichnet, dass** der mindestens eine Wandler (16) eine Arbeitsbandbreite (ΔW) aufweist und dass die Signalquelle (40 bis 46; 50) dafür konfiguriert ist, das Sendesignal (TX) bei Frequenzen zu erzeugen, die in der Arbeitsbandbreite (ΔW) liegen.

10. System nach Anspruch 9,
    **dadurch gekennzeichnet, dass** die Signalquelle (40 bis 46; 50) zum Erzeugen des Sendesignals (TX) mit einer ersten Sendefrequenz (F1) und einer zweiten Sendefrequenz (F2) konfiguriert ist, wobei die erste Sendefrequenz (F1) und die zweite Sendefrequenz (F2) an den Enden der Arbeitsbandbreite (ΔW) des Wandlers liegen.

11. System nach Anspruch 5 und einem der Ansprüche 8 bis 10,
    **dadurch gekennzeichnet, dass** die Signalquelle (40 bis 46, 50) von dem Pulsgenerator (12) derart angesteuert wird, dass bei Abgabe jedes von dem Pulsgenerator (12) erzeugten Pulses die Signalquelle (40 bis 46; 50) die Frequenz des Sendesignals (TX) modifiziert.

12. System nach Anspruch 11,
    **dadurch gekennzeichnet, dass** die Signalquelle (40 bis 46; 50) eine Mehrzahl von jeweiligen Signalgeneratoren (40, 42) aufweist, von denen jeder zum Erzeugen eines jeweiligen Signals mit einer bestimmten Frequenz (F1, F2) in der Lage ist, und dass die jeweiligen Signalgeneratoren (40, 42) durch den Pulsgenerator (12) bei Abgabe von jedem der Pulse zurückgesetzt werden können.

13. System nach einem der vorausgehenden Ansprüche,
    **dadurch gekennzeichnet, dass** es sich bei dem Wandler (16) um einen piezoelektrischen Wandler handelt.

14. System nach einem der vorausgehenden Ansprüche,
    **dadurch gekennzeichnet, dass** der Wandler (16) ihm zugeordnete jeweilige Sende- (16a) und Empfangs-Schnittstellen (16b) aufweist, so dass der Wandler (16) sowohl zum Erzeugen des Sendesignals (TX) in Abhängigkeit von dem von dem Chaosgenerator (10) erzeugten Signal als auch zum Schaffen des Empfangssignals (RX) entsprechend der Reflexion des Sendesignals (TX) von dem Hindernis (O) verwendet werden kann.

15. System nach Anspruch 14,
    **dadurch gekennzeichnet, dass** es eine Aktivierungs-/Deaktivierungsschaltung (52) zum Unterbinden eines gleichzeitigen Betriebs des Wandlers (16) sowohl während des Sendevorgangs (16a) als auch während des Empfangsvorgangs (16b) aufweist.

**Revendications**

1. Système de détection de la distance d'un obstacle (O), comprenant :

   - au moins un transducteur (16) destiné à générer un signal d'émission (TX) devant être envoyé dans la direction dudit obstacle (0) et destiné à obtenir un signal de réception (RX) correspondant à un écho produit par la réflexion dudit signal d'émission (TX) venant dudit obstacle (0), et
   - un générateur de chaos (10, 12, 14) pour piloter ledit au moins un transducteur (16) avec un signal chaotique de sorte que ledit signal d'émission (TX) ait les caractéristiques d'un signal chaotique, **caractérisé en ce qu'**il comprend :

   - une source de signal (40 à 46 ; 50) pour produire ledit signal d'émission (TX) avec au moins une première fréquence (F1) et au moins une deuxième fréquence (F2), différentes l'une de l'autre, ladite source de signal (40 à 46 ; 50) étant pilotée par ledit générateur de chaos (10, 12) de manière telle que la commutation entre ladite première fréquence (F1) et ladite deuxième fréquence (F2) a lieu à des intervalles de temps générés en fonction dudit signal chaotique.

2. Système selon la revendication 1, **caractérisé en ce qu'**il comprend un corrélateur (18) pour mettre en relation réciproque ledit signal d'émission (TX) et ledit signal de réception (RX) de manière à produire un signal de corrélation correspondant (18a), de sorte que la distance dudit obstacle (0) depuis ledit au moins un transducteur (16) est identifiée par le moment auquel ladite fonction de corrélation prend la valeur maximale.

3. Système selon les revendications 1 ou 2, **caractérisé en ce qu'**il comprend, comme générateur de chaos (10), un circuit de Chua.

4. Système selon l'une quelconque des revendications 1 à 3, **caractérisé en ce que** ledit signal d'émission (TX) est généré à partir d'une des variables d'état ($x_1$) dudit générateur de chaos (10).

5. Système selon l'une quelconque des revendications précédentes, **caractérisé en ce qu'**il comprend un générateur d'impulsions (12) piloté par ledit générateur de chaos (10) selon un schéma général de modulation d'impulsions en position, de sorte que l'intervalle de temps qui s'écoule entre la génération de deux impulsions consécutives par ledit générateur d'impulsions (12) a les caractéristiques d'un signal chaotique.

6. Système selon la revendication 5, **caractérisé en ce que** ledit générateur d'impulsions est un générateur d'impulsions d'un type analogique (12).

7. Système selon la revendication 6, **caractérisé en ce que** ledit générateur d'impulsions (12) comprend :

   - une source de signal en rampe (30) ; et
   - un comparateur à seuil dans lequel ledit signal en rampe est comparé à un signal de référence (34a) produit par un générateur de chaos, la génération desdites impulsions se produisant lorsque le niveau dudit signal en rampe atteint le niveau dudit signal de référence d'un type chaotique.

8. Système selon la revendication 1, **caractérisé en ce que** ladite source de signaux (40 à 46 ; 50) génère ledit signal d'émission (TX) en tant qu'un signal en onde carrée de fréquence variable.

9. Système selon la revendication 1 ou la revendication 8, **caractérisé en ce que** ledit au moins un transducteur (16) a une largeur de bande de travail ($\Delta W$), et ladite source de signaux (40 à 46 ; 50) est configurée pour générer ledit signal d'émission (TX) à des fréquences comprises dans ladite largeur de bande de travail ($\Delta W$).

10. Système selon la revendication 9, **caractérisé en ce que** ladite source de signaux (40 à 46 ; 50) est configurée (40, 42) pour générer ledit signal d'émission (TX) avec une première fréquence d'émission (F1) et une deuxième fréquence d'émission (F2), ladite première fréquence de transmission (F1) et ladite deuxième fréquence de transmission (F2) étant situées aux extrémités de ladite largeur de bande de travail ($\Delta W$) du transducteur.

11. Système selon la revendication 5 et l'une quelconque des revendications 8 à 10, **caractérisé en ce que** ladite source de signaux (40 à 46 ; 50) est pilotée par ledit générateur d'impulsions (12) de sorte que, lors de l'émission de chaque impulsion générée par ledit générateur d'impulsions (12), ladite source de signaux (40 à 46 ; 50) modifie la fréquence dudit signal d'émission (TX).

12. Système selon la revendication 11, **caractérisé en ce que** ladite source de signaux (40 à 46 ; 50) comprend une pluralité de générateurs de signaux respectifs (40, 42), chacun desquels est capable de générer un signal respectif à une fréquence donnée (F1, F2), et **en ce que** lesdits générateurs de signaux respectifs (40, 42) peuvent être réinitialisés par ledit générateur d'impulsions (12) lors de l'émission de chacune desdites impulsions.

13. Système selon l'une quelconque des revendications précédentes, **caractérisé en ce que** ledit transducteur (16) est un transducteur piézoélectrique.

14. Système selon l'une quelconque des revendications précédentes, **caractérisé en ce que** ledit transducteur (16) porte, associées à lui, des interfaces respectives d'émission (16a) et de réception (16b), de sorte que ledit transducteur (16) peut être utilisé à la fois pour générer ledit signal d'émission (TX) selon le signal généré par ledit générateur de chaos (10) et pour obtenir ledit signal de réception (RX) correspondant à la réflexion dudit signal d'émission (TX) venant dudit obstacle (0).

15. Système selon la revendication 14, **caractérisé en ce qu'**il comprend un circuit de validation / mise hors service (52) pour empêcher une opération simultanée dudit transducteur (16) à la fois pendant l'émission (16a) et pendant la réception (16b).

# Fig_1

# Fig_2

# Fig. 3

a)

Ch1 500mV Ch2 200mV M500 Ch1 / 1.30V

b)

Ch1 1.00V          M2.00ms Ch1 / 1.30V

# Fig. 4

Fig_5

a)

b)

Fig_6

a)

b)

Fig_7

Fig_9

Fig.8

CPPM

d1 60KHz  d2 50KHz

2ms

200ms

100ms

reset
reset
out 44a
gnd
select
TX
TX enable
trigger
INIT
RX TX
INIT

10  12  12a  46  40  42  44  48  48b  48a  52  50  50a  52a  14  14a  16a  16  16b  12a  18  18a

EP 1 324 069 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H.R. Everett.** *Sensors for Mobile Robots, Theory and Application,* 1995
- **KAWABATA K et al.** Distance measurement method under multiple ultra sonic sensors environment. *INDUSTRIAL ELECTRONICS, CONTROL, AND INSTRUMENTATION,* 1996
- *PROCEEDINGS OF THE 1996 IEEE IECON 22ND INTERNATIONAL CONFERENCE ON TAIPEI,* 05 August 1996, 812-816
- **G. Kolumbàn et al.** The Role of Synchronization in Digital Communications using Chaos. *Part I: Fundamentals of Digital Communications,* 01 October 1997
- **G.M. Maggio et al.** *Chaotic pulse-position modulation for ultrawide-band communication systems,* 28 September 1999
- **P. Arena ; S. Baglio ; L. Fortuna ; G. Manganaro.** *Chua's Circuit Can Be Generated by CNN Cells,* 01 February 1995